(19) Europäisches Patentamt

European Patent Office

Office européen des brevets

(11) **EP 3 592 629 B1**

(12) **FASCICULE DE BREVET EUROPEEN**

(45) Date de publication et mention
de la délivrance du brevet:
**03.08.2022 Bulletin 2022/31**

(21) Numéro de dépôt: **18712973.9**

(22) Date de dépôt: **08.03.2018**

(51) Classification Internationale des Brevets (IPC):
**B62D 15/02** (2006.01)　　**G05D 1/00** (2006.01)
**B60W 30/06** (2006.01)　　**B60T 7/22** (2006.01)
**B60W 10/06** (2006.01)　　**B60W 10/184** (2012.01)
**B60W 50/00** (2006.01)　　**G05D 1/02** (2020.01)

(52) Classification Coopérative des Brevets (CPC):
**B62D 15/027; B60T 7/22; B60W 10/06;**
**B60W 10/184; B60W 30/06; G05D 1/0225;**
B60T 2201/10; B60W 2050/001; B60W 2050/0027;
B60W 2520/10; B60W 2552/15; G05D 2201/0213

(86) Numéro de dépôt international:
**PCT/FR2018/050531**

(87) Numéro de publication internationale:
**WO 2018/162852 (13.09.2018 Gazette 2018/37)**

(54) **PROCÉDÉ ET SYSTÈME D'AIDE AU STATIONNEMENT D'UN VEHICULE AUTOMOBILE**

KRAFTFAHRZEUGEINPARKASSISTENZVERFAHREN UND -SYSTEM

MOTOR VEHICLE PARKING ASSIST METHOD AND SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.03.2017 FR 1751873**

(43) Date de publication de la demande:
**15.01.2020 Bulletin 2020/03**

(73) Titulaire: **Renault s.a.s**
**92100 Boulogne Billancourt (FR)**

(72) Inventeurs:
• **MARTIN, Guillaume**
**78000 Versailles (FR)**
• **SENE, Pape Abdoulaye**
**78000 Versailles (FR)**
• **SALIOU, Sébastien**
**35000 Rennes (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**DE-A1-102009 053 939 　 DE-A1-102013 215 432**
**US-A1- 2014 136 043**

**Description**

La présente invention concerne le domaine d'aides à la conduite d'un véhicule automobile, et notamment les aides au stationnement.

Plus particulièrement, l'invention concerne les procédés et systèmes d'aide au stationnement entièrement automatisé pour la réalisation de manœuvres de stationnement, par exemple de type créneau.

De tels procédés et systèmes d'aide au stationnement permettent la détection d'une place de stationnement puis prennent le contrôle sur la direction assistée électrique du véhicule afin de réaliser la manœuvre de stationnement. L'opération de braquage des roues en vue de la manœuvre de stationnement est ainsi entièrement réalisée de manière automatique.

Le conducteur du véhicule reste responsable du changement de rapport, de l'accélération et du freinage du véhicule. Le document US 2014/136043 A1 est considéré comme l'art antérieur le plus proche et révèle un système d'aide au stationnement d'un véhicule automobile permettant le stationnement du véhicule depuis une voie de circulation vers un emplacement libre de stationnement, ledit véhicule automobile comprenant un système de détection d'obstacles, un système de détection de places de stationnement, une direction assistée électrique pilotable, un moteur et un système de freinage, au moins un capteur odométrique, et comprenant un module de détermination de l'accélération du véhicule apte à délivrer une consigne d'accélération en fonction de la vitesse du véhicule et de la position d'un obstacle et un module de régulation de couple apte à calculer une consigne de freinage en fonction de la consigne d'accélération, de la vitesse du véhicule et de la pente de la route.

On connait du document WO 2014/167255 - A1 (Renault) un procédé de planification de trajectoire pour effectuer une manœuvre de stationnement automatisée d'un véhicule automobile. Toutefois, un tel procédé ne tient pas compte de la vitesse longitudinale du véhicule.

On peut également se référer au document WO 2014/191209 - A1 (Renault) qui décrit un procédé de délégation des manœuvres de stationnement du véhicule à un système automatisé.

Dans de tels procédés, l'accélération est sous l'entière responsabilité du conducteur. Il existe alors un risque que le véhicule roule à une vitesse excessive pouvant engendrer la collision avec des obstacles fixes ou mobiles se trouvant à proximité du véhicule. De plus, la détection d'obstacles, le freinage et l'immobilisation du véhicule sont également sous le contrôle exclusif du conducteur.

Il existe un besoin d'améliorer les procédés et systèmes d'aide à la conduite afin de proposer au conducteur une aide au stationnement la plus sécurisée possible.

L'objet de la présente invention est donc de fournir un système et un procédé d'aide au stationnement capables de prendre en compte la dispersion des actionneurs, notamment des systèmes de freinage, tout en assurant le maintien du véhicule sur une route en pente sans influer sur la précision de la régulation.

L'invention a pour objet un système d'aide au stationnement d'un véhicule automobile permettant le stationnement du véhicule depuis une voie de circulation vers un emplacement libre de stationnement et la sortie de ladite place de stationnement vers la voie de circulation, ledit véhicule automobile comprenant un système de détection d'obstacles, un système de détection de places de stationnement, une direction assistée électrique pilotable en angle de braquage, un moteur et un système de freinage pilotables en couple, une boite de vitesse automatique ou un système dit «shift by wire », au moins un capteur odométrique, un accéléromètre, une interface visuelle et sonore et un moyen d'activation d'une fonction pilotage automatique.

Le système d'aide au stationnement comprend un module de détermination ou calcul de l'accélération du véhicule apte à délivrer une consigne d'accélération en fonction d'une consigne de vitesse du véhicule et de la distance avec un obstacle et un module de régulation de couple apte à calculer une consigne de couple de freinage et une consigne de couple moteur en fonction de la consigne d'accélération, de la vitesse du véhicule et de la pente de la route.

Le système permet de réguler à basse vitesse le déplacement du véhicule. Il dispose pour cela d'un estimateur de vitesse à faible vitesse et un estimateur d'accélération.

Un tel système d'aide au stationnement permet au conducteur de se garer plus facilement en prenant non seulement le contrôle sur les actionneurs latéraux, tels que la direction assistée électrique, mais également sur les actionneurs longitudinaux, tels que le moteur, la boite de vitesse et le système de freinage du véhicule, tout en laissant la possibilité au conducteur d'agir sur la manœuvre de stationnent à tout moment.

Selon un mode de réalisation, le système comprend quatre états de fonctionnement :

- un état initial correspondant à la phase de recherche d'une place de stationnement par le système de détection de places de stationnement,
- un premier état correspondant à une phase d'attente du début de la manœuvre dans laquelle le module de détermination de l'accélération calcule une consigne d'accélération négative afin d'assurer le maintien à l'arrêt du véhicule, en tenant compte de la route,
- un deuxième état correspondant à une phase d'annulation de l'accélération dans laquelle le module de détermination de l'accélération calcule une première consigne d'accélération selon une rampe de décroissance rapide et une deuxième consigne d'accélération selon une rampe de décroissance lente,

- un troisième état dans lequel le module de détermination de l'accélération calcule une consigne d'accélération en fonction d'un filtre par anticipation et d'un régulateur proportionnel intégral, et
- un quatrième état correspondant à la phase d'activation du freinage, dans laquelle le module de détermination de l'accélération calcule une consigne d'accélération en fonction d'un gain et d'une rampe de freinage.

Ainsi, à chaque état de la manœuvre de stationnement, le module de détermination de l'accélération calcule une consigne d'accélération.

Avantageusement, le module de régulation de couple comprend un module de calcul de couple initial en fonction de la consigne d'accélération calculée par le module de détermination de l'accélération à chaque état de la manœuvre de stationnement.

Par exemple, le module de calcul de couple initial comprend un convertisseur de la valeur de la consigne d'accélération en consigne de couple à la roue en fonction de la vitesse du véhicule et de la pente de la route estimée en utilisant l'information fournie par l'accéléromètre du véhicule.

Le module de calcul de couple initial peut également comprendre en outre un saturateur délivrant en sortie une composante positive correspondant à la consigne initiale de couple moteur et un soustracteur apte à soustraire à la consigne de couple à la roue, la composante positive pour obtenir la consigne initiale de couple de freinage.

Avantageusement, le module de régulation de couple comprend un module de régulation de décélération activé uniquement lors des phases d'interruptions de la manœuvre de stationnement, telles que la présence d'obstacles sur la trajectoire, l'annulation de la manœuvre par le conducteur ou la défaillance des actionneurs autres que le système de freinage. Ledit module de régulation de décélération est apte à envoyer des ordres de bypass et à calculer une consigne de couple de freinage lorsqu'une interruption est détectée.

Par exemple, le module de régulation de couple comprend un module de calcul d'une consigne de couple finale capable de faire l'arbitrage entre les différentes consignes de couple qu'il reçoit en entrée afin de délivrer une consigne finale de couple moteur à la roue et une consigne finale de couple de freinage à la roue.

Selon un second aspect, l'invention concerne un procédé d'aide au stationnement d'un véhicule automobile permettant le stationnement du véhicule depuis une voie de circulation vers un emplacement libre de stationnement et la sortie de ladite place de stationnement vers la voie de circulation, ledit véhicule automobile comprenant un système de détection d'obstacles, un système de détection de places de stationnement, une direction assistée électrique pilotable en angle de braquage, un moteur et un système de freinage pilotables en couple, une boite de vitesse automatique ou un système dit «shift by wire », au moins un capteur odomètrique, un accéléromètre, une interface visuelle et sonore et un moyen d'activation d'une fonction pilotage automatique.

Dans le procédé, on calcule une consigne d'accélération en fonction de la vitesse du véhicule et de la distance avec un obstacle et on calcule une consigne de couple de freinage et une consigne de couple moteur en fonction de la consigne d'accélération, de la vitesse du véhicule et de la pente de la route.

Par exemple, pour calculer une consigne de couple de freinage et une consigne de couple moteur, on calcule une consigne initiale de couple moteur et une consigne initiale de couple de freinage en fonction de la consigne d'accélération et de la pente de la route, on vérifie s'il y a une interruption de la manœuvre de stationnement, et on calcule une consigne finale de couple moteur et une consigne finale de couple de freinage et fonction des consignes initiales de couple et la détection de l'interruption.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 représente schématiquement un système d'aide au stationnement d'un véhicule automobile selon l'invention ;
- la figure 2 illustre les états du système d'aide au stationnement selon la figure 1 ;
- la figure 3 illustre en détails le module de régulation de couple du système d'aide au stationnement de la figure 1 ; et
- la figure 4 illustre les étapes d'un procédé d'aide au stationnement selon l'invention mis en œuvre par le système d'aide au stationnement.

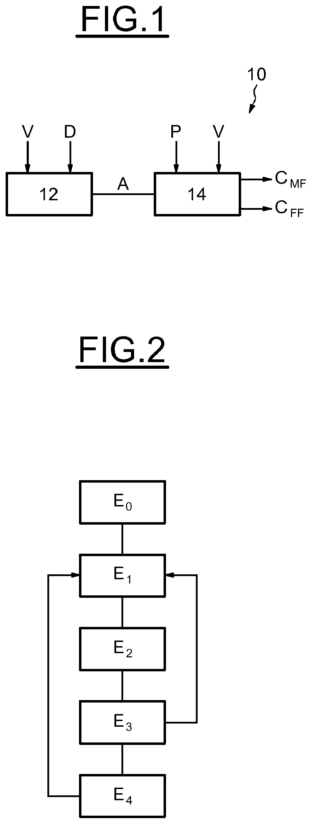

Sur la figure 1, on a représenté de manière très schématique un système 10 d'aide à la conduite et notamment au stationnement d'un véhicule automobile (non représenté). Le véhicule automobile comprend les éléments suivants qui ne sont pas représentés sur les figures pour plus de clarté : un système de détection d'obstacles situés à proximité du véhicule, par exemple à une distance inférieure à 2m, un système de détection de places de stationnement, une direction assistée électrique pilotable en angle de braquage, un moteur et un système de freinage tous les deux pilotables en couple, une boite de vitesse automatique ou un système dit «shift by wire », au moins un capteur odométrique, un accéléromètre, une interface visuelle et sonore ainsi qu'un moyen d'activation d'une fonction pilotage automatique ou « homme-mort ».

Le système 10 permet de réguler à basse vitesse le déplacement du véhicule. Il dispose pour cela d'un estimateur de vitesse à faible vitesse et un estimateur d'accélération (non représentés).

Le système 10 comprend un module 12 de calcul ou détermination de l'accélération du véhicule apte à délivrer une consigne d'accélération A en fonction de la vitesse V du véhicule et de la distance D avec un obstacle et un module 14 de régulation de couple apte à calculer une consigne de couple de freinage $C_{FF}$ et une consigne de couple moteur $C_{MF}$ en fonction de la consigne d'accélération A, de la vitesse du véhicule V et de la pente P de la route.

Le module 12 de détermination de l'accélération calcule, à chaque état E du système 10 d'aide au stationnement, une consigne d'accélération A qui sera transmise au module 14 de régulation de couple afin d'adapter en permanence le pilotage des actionneurs du véhicule en fonction du stade de la manœuvre de stationnement et de l'environnement à proximité du véhicule.

Les états sont représentés sur la figure 2.

L'état initial E0 du système d'aide au stationnement, correspond à la phase de recherche d'une place de stationnement. A cet état E0, le système 10 d'aide au stationnement n'est pas actif, c'est-à-dire qu'aucun pilotage n'est réalisé sur les actionneurs. Le conducteur du véhicule reste entièrement responsable de son véhicule. Pour activer le système 10 d'aide au stationnement, le conducteur doit appuyer sur un moyen d'activation (non représenté) d'une fonction de pilotage automatique ou « homme-mort » présent sur le tableau de bord du véhicule, sélectionner le type de manœuvre de stationnement, tel que par exemple un créneau, ainsi que le côté du véhicule à partir duquel le conducteur souhaite stationner le véhicule. L'interface homme-machine (non représentée) du véhicule invite alors le conducteur à avancer jusqu'à la détection d'une place de stationnement puis à arrêter le véhicule.

Une fois la place de stationnement validée par le conducteur, le système 10 d'aide au stationnement passe à l'état E1, correspondant à une phase d'attente du début de la manœuvre. Lors de cette phase d'attente E1, le module 12 de détermination de l'accélération calcule une consigne d'accélération négative selon l'équation suivante :

$$A_{E1}(k) = C \qquad \qquad \text{(Eq. 1)}$$

Avec :

$A_{E1}$, la consigne d'accélération calculée à l'état E1, exprimée en $m/s^2$ ;
k, l'instant d'échantillonnage ; et
C, une constante, exprimée en $m/s^2$, correspondant à la cible d'accélération calculée par le module de détermination de l'accélération afin d'assurer le maintien à l'arrêt du véhicule, en tenant compte de la route et du véhicule, par exemple de la pente de la route et de l'incertitude sur la masse du véhicule.

En cas de stationnement par créneau, le conducteur doit engager la marche arrière. Lorsque la marche arrière est engagée et que le conducteur transmet l'ordre de démarrer la manœuvre de stationnement au système d'aide au stationnement, celui-ci passe à l'état E2, correspondant à une phase d'annulation de l'accélération (initialement définie pour assurer le maintien du véhicule à l'arrêt) dans laquelle le module de détermination de l'accélération calcule une première consigne d'accélération selon une rampe de décroissance rapide et une deuxième consigne d'accélération selon une rampe de décroissance lente, selon les équations suivantes :

$$A_{E2}(k) = A_{E2}(k-1).K.Te.K_F \qquad \text{si} \qquad A_{E2}(k-1) < S \qquad \text{(Eq. 2)}$$

$$A_{E2}(k) = A_{E2}(k-1).K.Te.K_S \qquad \qquad \text{(Eq. 3)}$$

Avec :

$A_{E2}$, la consigne d'accélération calculée à l'état E2, exprimée en $m/s^2$ ;
K, le gain de l'intégrateur discret ;
Te, la période d'échantillonnage ;
$K_F$, le gain de la rampe rapide ;
Ks, le gain de la rampe rapide ; et
S, la valeur de seuil de changement de rampe de décélération.

A la fin de l'annulation complète de la consigne d'accélération ou lorsque le système d'aide au stationnement détecte un mouvement du véhicule, celui-ci passe à l'état E3.

Pour détecter un mouvement du véhicule, le système d'aide au stationnement comprend un module de détection de mouvement basé sur les « top roues » à l'aide d'un estimateur interne du système d'aide au stationnement. L'appellation « top roues » fait référence à la sortie d'un encodeur situé au niveau de la roue du véhicule et qui s'incrémente tous les X degrés de rotation de la roue. La valeur X dépend du véhicule et de la taille de la roue. Cet encoder fait partie de l'odométrie du véhicule et il en existe sur chaque roue. A chaque rotation de X degrés, on a un « top » de plus.

Lors des états E1 et E2, le véhicule est immobile. Lors de l'état E3, le module 12 de détermination de l'accélération calcule une consigne d'accélération $A_{E3}$ selon l'équation suivante :

$$A_{E3}(k) = K_{PID}.A_{PID}(k). + K_{FF}.A_{FF}(k) \qquad \text{(Eq. 4)}$$

$$\text{Avec } A_{FF}(k) = \frac{dV_{req}}{dt} \qquad \text{(Eq. 5)}$$

Avec :

$A_{E3}$, la consigne d'accélération calculée à l'état E3, exprimée en $m/s^2$ ;
$K_{PID}$, le gain de pondération du régulateur Proportionnel intégral dérivé ;
$A_{PID}$, la consigne d'accélération du Proportionnel intégral dérivé, exprimée en $m/s^2$ ;
$K_{FF}$, le gain de pondération du filtre par anticipation « feed forward » ;
$A_{FF}$, la consigne d'accélération du filtre par anticipation « feed forward », exprimée en $m/s^2$ ; et
$V_{req}$, la consigne de vitesse du système d'aide au stationnement correspondant à une valeur de seuil à ne pas dépasser, exprimée en $m/s$.

Sur détection d'un obstacle ou sur la volonté du conducteur de reprendre le contrôle de son véhicule ou en cas de disfonctionnement d'un des actionneurs latéraux ou longitudinaux du véhicule, le système d'aide au stationnement passe à l'état E1.

A la fin du mouvement, et sans interruptions de l'état E3, le système d'aide au stationnement passe à l'état E4 correspondant à la phase d'activation du freinage, dans laquelle le module de détermination de l'accélération calcule une consigne d'accélération $A_{E4}$ selon l'équation suivante :

$$A_{E4}(k) = A_{E4}(k-1).K.Te.K_{sb} \qquad \text{(Eq. 6)}$$

Avec :

$A_{E4}$, la consigne d'accélération calculée à l'état E4, exprimée en $m/s^2$ ;
$K_{SB}$, le gain de la rampe de freinage.

Une fois le véhicule à l'arrêt et la rampe de freinage terminée, le système d'aide au stationnement passe à l'état EI qui correspond à la phase d'attente du prochain mouvement. Lors de cet état, le véhicule est maintenu à l'arrêt en appliquant une consigne d'accélération négative $A_{E1}$.

Toutes ces consignes d'accélérations $A_{E0}$, $A_{E1}$, $A_{E2}$, $A_{E3}$ et $A_{E4}$ sont ensuite synthétisées en une consigne d'accélération unique A. Cette dernière est déterminée grâce à la logique suivante basée sur les états $E_x$ du système 10 :

$A(k) = A_{E0}(k)$. si E (Etat du système) = $E_0$; Ou
$A(k) = A_{E1}(k)$. si E (Etat du système) = $E_1$; Ou
$A(k) = A_{E2}(k)$. si E (Etat du système) = $E_2$; Ou
$A(k) = A_{E3}(k)$. si E (Etat du système) = $E_3$; Ou
$A(k) = A_{E4}(k)$. si E (Etat du système) = $E_4$;

Cette consigne d'accélération unique A est ensuite transmise au module 14 de régulation de couple afin de calculer les consignes de couple nécessaires pour la commande des actionneurs (moteur et frein) du véhicule.

Le module 14 de régulation de couple comprend un module 16 de calcul de couple initial $C_{MI}$, $C_{FI}$ en fonction de la consigne d'accélération A calculée par le module 12 de régulation de l'accélération.

Le module 16 de calcul de couple initial comprend un convertisseur 18 de la valeur de la consigne d'accélération

A en en consigne de couple à la roue Cr en fonction de la vitesse du véhicule V et de la pente de la route P estimée en utilisant l'information fournie par l'accéléromètre du véhicule (non représenté) au démarrage de la manœuvre lorsque le véhicule est à l'arrêt. En fonction de la pente de la route P, on détermine l'effort appliqué au véhicule du fait de cette pente puis le couple correspondant $C_P$ à rajouter à la consigne de couple à la roue.

La consigne de couple à la roue Cr s'écrit selon l'équation suivante :

$$C_r = C_P + A.m.R \qquad \text{(Eq. 7)}$$

Avec :

$C_r$, la consigne de couple à la roue, exprimée en N.m ;
$C_P$, le couple correspondant à l'effort appliqué au véhicule du fait de la pente de la route, exprimé en N.m ;
m, la masse du véhicule, exprimée en kg ; et
R, le rayon de la roue, exprimé en m.

Le module 16 de calcul de la consigne initiale de couple moteur $C_{MI}$ et de la consigne initiale de couple $C_{FI}$ au système de freinage comprend en outre un saturateur 20 délivrant en sortie une composante positive $C_{MI}$ correspondant à la consigne initiale de couple pour le moteur et un soustracteur 22 apte à soustraire à la consigne de couple à la roue Cr, la composante de couple moteur $C_{MI}$ précédemment déterminée pour obtenir la consigne initiale de couple au système de freinage à l'aide d'un deuxième saturateur 24.

Le module 14 de régulation de couple comprend en outre un module 26 de régulation de décélération activé uniquement lors des phases d'interruptions de la manœuvre de stationnement, telles que la présence d'obstacles sur la trajectoire, l'annulation de la manœuvre par le conducteur ou la défaillance des actionneurs autres que le système de freinage.

Le module 26 de régulation de décélération envoie des ordres de bypass et calcule une consigne de couple de freinage $C_F$ en fonction d'une valeur estimée de l'accélération $A_{Est}$ du véhicule obtenue par dérivation de la vitesse du véhicule. Ce module 26 est basé sur un régulateur proportionnel intégral avec dérivée filtrée.

Le module 14 de régulation de couple comprend en outre un module 28 de calcul d'une consigne de couple finale capable de faire l'arbitrage entre les différentes consignes de couple qu'il reçoit en entrée afin de délivrer une consigne finale de couple moteur $C_{MF}$ à la roue et une consigne finale de couple de freinage $C_{FF}$ à la roue selon les équations suivantes :

$$C_{MF}(k) = C_{MI}(k) \qquad \text{si pas de bypass} \qquad \text{(Eq. 8)}$$

Sinon

$$C_{MF}(k) = 0 \qquad \text{(Eq. 9)}$$

$$C_{FF}(k) = C_{FI}(k) \qquad \text{si pas de bypass} \qquad \text{(Eq. 10)}$$

Sinon,

$$C_{FF}(k) = C_F \qquad \text{(Eq. 11)}$$

Avec :

$C_{MF}$, la consigne finale de couple moteur à la roue, exprimée en N.m ;
$C_{FF}$, la consigne finale de couple de freinage à la roue, exprimée en N.m ; et
$C_F$, la consigne de couple de freinage à la roue calculée par le module 26, exprimée en N.m.

Ainsi, on obtient des consignes de couple de freinage aux états $E_1$, $E_2$ et $E_4$ du système d'aide au stationnement et on obtient des consignes de couples moteur et/ou de freinage en fonction de l'environnement à l'état $E_3$ du système d'aide au stationnement.

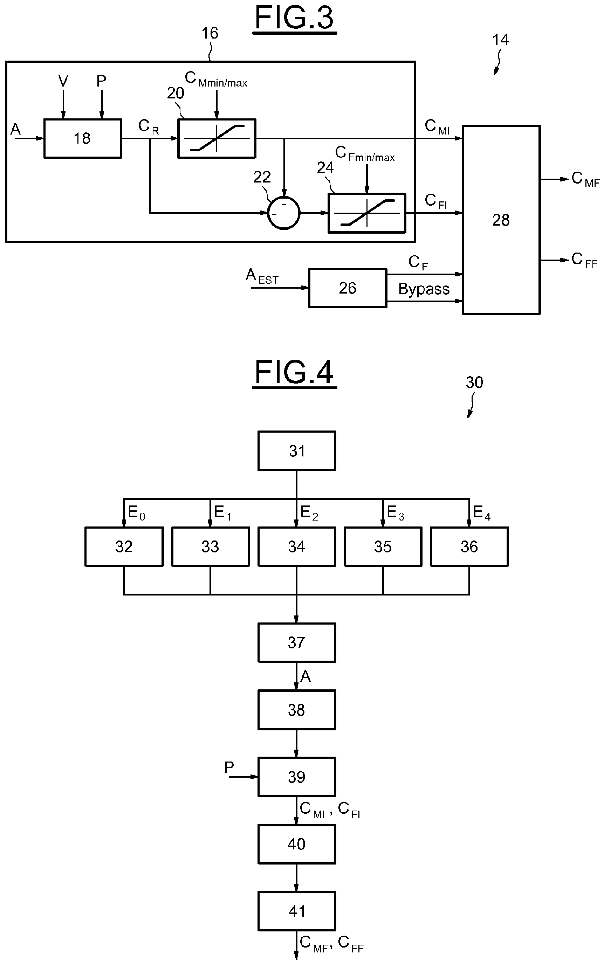

La figure 4 représente un organigramme de mise en œuvre d'un procédé 30 d'aide au stationnement d'un véhicule automobile.

Le procédé 30 permet le stationnement du véhicule depuis une voie de circulation vers un emplacement libre de stationnement, ainsi que la sortie de ladite place de stationnement vers la voie de circulation.

Le procédé 30 comprend une étape 31 de détermination de l'état E du système d'aide au stationnement, c'est-à-dire un des états E0 à E4 précédemment définis.

Lors de l'état initial E0, le procédé comprend une étape 32 de recherche d'une place de stationnement.

Une fois la place de stationnement validée par le conducteur, le procédé comprend une étape 33 correspondant à l'état EI d'attente du début de la manœuvre.

Lorsque les conditions pour engager la manœuvre sont réunies, c'est-à-dire, en cas de stationnement par créneau, lorsque la marche arrière est engagée par le conducteur et que le conducteur transmet l'ordre de démarrer la manœuvre de stationnement, le procédé comprend une étape 34 correspondant à l'état E2 d'annulation de l'accélération dans laquelle le module de détermination de l'accélération calcule une première consigne d'accélération selon une rampe de décroissance au système d'aide au stationnement.

A la fin de l'annulation complète de la consigne d'accélération ou lorsque le système 10 d'aide au stationnement détecte un mouvement du véhicule, le procédé passe à l'étape 35 correspondant à l'état E3.

A la fin du mouvement, et sans interruptions de l'état E3, le procédé passe à l'étape 36 correspondant à l'état E4 d'activation du freinage, dans lequel le module de détermination de l'accélération calcule une consigne d'accélération $A_{E4}$.

Le procédé 30 comprend en outre une étape 37 de calcul d'une consigne d'accélération A à chaque état E déterminé selon l'une des équations Eq.1 à Eq.6 et une étape 38 de transmission de la consigne d'accélération A au module 14 de calcul d'une consigne de couple.

Le procédé 30 comprend une étape 39 de calcul d'une consigne initiale de couple moteur $C_{MI}$ et d'une consigne initiale de couple de freinage $C_{FI}$ en fonction de la consigne d'accélération et de la pente P de la route.

Le procédé 30 comprend une étape 40 de vérification d'une interruption, telles que par exemple la présence d'obstacles sur la trajectoire, l'annulation de la manœuvre par le conducteur ou la défaillance des actionneurs. Si une interruption est détectée, l'étape de détection transmet une valeur de bypass positive et calcule une consigne de couple de freinage grâce au régulateur proportionnel intégral avec dérivée filtrée, en fonction d'une valeur estimée de l'accélération du véhicule obtenue par dérivation de la vitesse du véhicule.

Le procédé comprend une étape 41 de calcul d'une consigne de couple finale capable de faire l'arbitrage entre les différentes consignes de couple qu'il reçoit en entrée afin de délivrer une consigne finale de couple moteur $C_{MF}$ à la roue et une consigne finale de couple de freinage $C_{FF}$ à la roue selon les équations Eq. 8 à Eq. 11.

Grace au système et au procédé d'aide au stationnement selon l'invention, il est possible de commander le mouvement longitudinal du véhicule dans une manœuvre de stationnement assisté tout en prenant en compte la pente de la route afin d'assurer le maintien du véhicule pendant les phases statiques de la manœuvre.

**Revendications**

1. Système d'aide au stationnement d'un véhicule automobile permettant le stationnement du véhicule depuis une voie de circulation vers un emplacement libre de stationnement et la sortie de ladite place de stationnement vers la voie de circulation, ledit véhicule automobile comprenant un système de détection d'obstacles, un système de détection de places de stationnement, une direction assistée électrique pilotable en angle de braquage, un moteur et un système de freinage pilotables en couple, une boite de vitesse automatique ou un système dit «shift by wire », au moins un capteur odométrique, un accéléromètre, et un moyen d'activation d'une fonction de pilotage automatique, **caractérisé en ce que** le système d'aide au stationnement comprend un module (12) de détermination de l'accélération du véhicule apte à délivrer une consigne d'accélération (A) en fonction de la vitesse (V) du véhicule et de la distance (D) avec un obstacle et un module (14) de régulation de couple apte à calculer une consigne de couple de freinage ($C_{FF}$) et une consigne de couple moteur ($C_{MF}$) en fonction de la consigne d'accélération (A), de la vitesse du véhicule (V) et de la pente (P) de la route.

2. Système selon la revendication 1, comprenant quatre états de fonctionnement, un état initial (E0) correspondant à la phase de recherche d'une place de stationnement par le système de détection de places de stationnement, un premier état (E1) correspondant à une phase d'attente du début de la manœuvre dans laquelle le module (12) de détermination de l'accélération calcule une consigne d'accélération négative afin d'assurer le maintien à l'arrêt du véhicule, en tenant compte de la route, un deuxième état (E2) correspondant à une phase d'annulation de l'accélération dans laquelle le module (12) de détermination de l'accélération calcule une première consigne d'accélération selon une rampe de décroissance rapide et une deuxième consigne d'accélération selon une rampe de décroissance lente, un troisième état (E3) dans lequel le module (12) de détermination de l'accélération calcule une consigne d'accélération en fonction d'un filtre par anticipation et d'un régulateur proportionnel intégral, et un quatrième état (E4) correspondant à la phase d'activation du freinage, dans laquelle le module (12) de détermination de l'accélération calcule une consigne d'accélération en fonction d'un gain d'une rampe de freinage.

3. Système selon la revendication 2, dans lequel le module (14) de régulation de couple comprend un module (16) de calcul de couple initial ($C_{MI}$, $C_{FI}$) en fonction de la consigne d'accélération (A) calculée par le module (12) de détermination de l'accélération à chaque état (E1, E2, E3)

4. Système selon la revendication 3, dans lequel le module (16) de calcul de couple initial comprend un convertisseur (18) de la valeur de la consigne d'accélération (A) en en consigne de couple à la roue (Cr) en fonction de la vitesse du véhicule (V) et de la pente de la route (P) estimée en utilisant l'information fournie par l'accéléromètre du véhicule.

5. Système selon la revendication 4, dans lequel le module (16) de calcul de couple initial comprend en outre un saturateur (20) délivrant en sortie une composante positive ($C_{MI}$) correspondant à la consigne initiale de couple moteur et un soustracteur (22) apte à soustraire à la consigne de couple à la roue (Cr), la composante positive ($C_{MI}$) pour obtenir la consigne initiale ($C_{FI}$) de couple de freinage.

6. Système selon l'une quelconque des revendication 3 à 5, dans lequel le module (14) de régulation de couple comprend un module (26) de régulation de décélération activé uniquement lors des phases d'interruptions de la manœuvre de stationnement, telles que la présence d'obstacles sur la trajectoire, l'annulation de la manœuvre par le conducteur ou la défaillance des actionneurs autres que le système de freinage, ledit module (26) de régulation de décélération étant apte à envoyer des ordres de bypass et à calculer une consigne de couple de freinage ($C_F$) lorsqu'une interruption est détectée.

7. Système selon la revendication 6, dans lequel le module (14) de régulation de couple comprend un module (28) de calcul d'une consigne de couple finale capable de faire l'arbitrage entre les différentes consignes de couple ($C_{FI}$, $C_{MI}$, $C_F$) qu'il reçoit en entrée afin de délivrer une consigne finale de couple moteur ($C_{MF}$) à la roue et une consigne finale de couple de freinage ($C_{FF}$) à la roue.

8. Procédé d'aide au stationnement d'un véhicule automobile permettant le stationnement du véhicule depuis une voie de circulation vers un emplacement libre de stationnement et la sortie de ladite place de stationnement vers la voie de circulation, ledit véhicule automobile comprenant un système de détection d'obstacles, un système de détection de places de stationnement, une direction assistée électrique pilotable en angle de braquage, un moteur et un système de freinage pilotables en couple, une boite de vitesse automatique ou un système dit «shift by wire », au moins un capteur odométrique, un accéléromètre, une interface visuelle et sonore et un moyen d'activation d'une fonction pilotage automatique, **caractérisé en ce que** l'on calcule une consigne d'accélération (A) en fonction de la vitesse (V) du véhicule et de la distance (D) avec un obstacle et on calcule une consigne de couple de freinage ($C_{FF}$) et une consigne de couple moteur ($C_{MF}$) en fonction de la consigne d'accélération (A), de la vitesse du véhicule (V) et de la pente (P) de la route.

9. Procédé selon la revendication 8, dans lequel pour calculer une consigne de couple de freinage ($C_{FF}$) et une consigne de couple moteur ($C_{MF}$), on calcule une consigne initiale de couple moteur ($C_{MI}$) et une consigne initiale de couple de freinage ($C_{FI}$) en fonction de la consigne d'accélération (A) et de la pente (P) de la route, on vérifie s'il y a une interruption de la manœuvre de stationnement, et on calcule une consigne finale de couple moteur ($C_{MF}$) et une consigne finale de couple de freinage ($C_{FF}$) et fonction des consignes initiales de couple ($C_{MI}$, $C_{FI}$) et la détection de l'interruption.

**Patentansprüche**

1. Einparkhilfssystem eines Kraftfahrzeugs, das das Einparken des Fahrzeugs von einem Verkehrsweg zu einem freien Stellplatz und das Ausfahren aus dem Stellplatz zum Verkehrsweg gestattet, wobei das Kraftfahrzeug ein System zur Detektion von Hindernissen, ein System zur Detektion von Stellplätzen, eine elektrische Hilfskraftlenkung, die im Einschlagwinkel steuerbar ist, einen Motor und ein Bremssystem, die im Drehmoment steuerbar sind, ein Automatikgetriebe oder ein "Shift-by-Wire"-System, mindestens einen Odometriesensor, einen Beschleunigungsmesser und ein Mittel zur Aktivierung einer Automatiksteuerfunktion umfasst, **dadurch gekennzeichnet, dass** das Einparkhilfssystem ein Modul (12) zur Bestimmung der Beschleunigung des Fahrzeugs, das geeignet ist, einen Beschleunigungssollwert (A) je nach der Geschwindigkeit des Fahrzeugs (V) und der Entfernung (D) zu einem Hindernis zu liefern, und ein Modul (14) zur Drehmomentregelung umfasst, das geeignet ist, einen Bremsmomentsollwert ($C_{FF}$) und einen Motordrehmomentsollwert ($C_{MF}$) je nach dem Beschleunigungssollwert (A), der Geschwindigkeit des Fahrzeugs (V) und der Neigung (P) der Straße zu berechnen.

2. System nach Anspruch 1, umfassend vier Betriebszustände, einen Anfangszustand (E0), der einer Phase des Suchens nach einem Stellplatz durch das System zur Detektion von Stellplätzen entspricht, einen ersten Zustand (E1), der einer Phase des Wartens auf den Beginn des Manövers entspricht, in dem das Modul (12) zur Bestimmung der Beschleunigung einen negativen Beschleunigungssollwert berechnet, um sicherzustellen, dass das Fahrzeug im Stillstand gehalten wird, unter Berücksichtigung der Straße, einen zweiten Zustand (E2), der einer Phase des Aufhebens der Beschleunigung entspricht, in dem das Modul (12) zur Bestimmung der Beschleunigung einen ersten Beschleunigungssollwert gemäß einer Rampe mit schneller Abnahme und einen zweiten Beschleunigungssollwert gemäß einer Rampe mit langsamer Abnahme berechnet, einen dritten Zustand (E3), in dem das Modul (12) zur Bestimmung der Beschleunigung einen Beschleunigungssollwert in Abhängigkeit von einem Feedforward-Filter und einem Proportional-Integral-Regler berechnet, und einen vierten Zustand (E4), der einer Phase des Aktivierens des Bremsens entspricht, in dem das Modul (12) zur Bestimmung der Beschleunigung einen Beschleunigungssollwert je nach einer Verstärkung einer Bremsrampe berechnet.

3. System nach Anspruch 2, wobei das Modul (14) zur Drehmomentregelung ein Modul (16) zur Berechnung eines Anfangsdrehmoments ($C_{MI}$, $C_{FI}$) in Abhängigkeit von dem Beschleunigungssollwert (A) umfasst, der vom Modul (12) zur Bestimmung der Beschleunigung in jedem Zustand (E1, E2, E3) berechnet wird.

4. System nach Anspruch 3, wobei das Modul (16) zur Berechnung eines Anfangsdrehmoments einen Umwandler (18) des Werts des Beschleunigungssollwerts (A) in einen Drehmomentsollwert an dem Rad (Cr) in Abhängigkeit von der Geschwindigkeit des Fahrzeugs (V) und der Neigung der Straße (P) umfasst, die mithilfe der Information geschätzt wird, die vom Beschleunigungsmesser des Fahrzeugs bereitgestellt wird.

5. System nach Anspruch 4, wobei das Modul (16) zur Berechnung eines Anfangsdrehmoments ferner einen Sättiger (20), der am Ausgang eine positive Komponente ($C_{MI}$) liefert, die dem anfänglichen Motordrehmomentsollwert entspricht, und einen Subtrahierer (22) umfasst, der geeignet ist, vom Drehmomentsollwert an dem Rad (Cr) die positive Komponente ($C_{MI}$) zu subtrahieren, um den anfänglichen Bremsmomentsollwert ($C_{FI}$) zu erhalten.

6. System nach einem der Ansprüche 3 bis 5, wobei das Modul (14) zur Drehmomentregelung ein Modul (26) zur Verzögerungsregelung umfasst, das nur bei Unterbrechungsphasen des Parkmanövers aktiviert wird, wie etwa das Vorhandensein von Hindernissen auf dem Weg, der Abbruch des Manövers durch den Fahrer oder der Ausfall der anderen Aktoren als das Bremssystem, wobei das Modul (26) zur Verzögerungsregelung geeignet ist, Bypassbefehle zu senden und einen Bremsmomentsollwert ($C_F$) zu berechnen, wenn eine Unterbrechung detektiert wird.

7. System nach Anspruch 6, wobei das Modul (14) zur Drehmomentregelung ein Modul (28) zur Berechnung eines endgültigen Drehmomentsollwerts umfasst, das geeignet ist, zwischen den verschiedenen Drehmomentsollwerten ($C_{FI}$, $C_{MI}$, $C_F$) zu entscheiden, die es am Eingang empfängt, um einen endgültigen Motordrehmomentsollwert ($C_{MF}$) an das Rad und einen endgültigen Bremsmomentsollwert ($C_{FF}$) an das Rad zu liefern.

8. Einparkhilfsverfahren eines Kraftfahrzeugs, das das Einparken des Fahrzeugs von einem Verkehrsweg zu einem freien Stellplatz und das Ausfahren aus dem Stellplatz zum Verkehrsweg gestattet, wobei das Kraftfahrzeug ein System zur Detektion von Hindernissen, ein System zur Detektion von Stellplätzen, eine elektrische Hilfskraftlenkung, die im Einschlagwinkel steuerbar ist, einen Motor und ein Bremssystem, die im Drehmoment steuerbar sind, ein Automatikgetriebe oder ein "Shift-by-Wire"-System, mindestens einen Odometriesensor, einen Beschleunigungsmesser, eine visuelle und Audio-Schnittstelle und ein Mittel zur Aktivierung einer Automatiksteuerfunktion umfasst, **dadurch gekennzeichnet, dass** ein Beschleunigungssollwert (A) je nach der Geschwindigkeit (V) des Fahrzeugs und der Entfernung (D) zu einem Hindernis berechnet wird und ein Bremsmomentsollwert ($C_{FF}$) und ein Motordrehmomentsollwert ($C_{MF}$) je nach dem Beschleunigungssollwert (A), der Geschwindigkeit des Fahrzeugs (V) und der Neigung (P) der Straße berechnet werden.

9. Verfahren nach Anspruch 8, wobei zur Berechnung eines Bremsmomentsollwerts ($C_{FF}$) und eines Motordrehmomentsollwerts ($C_{MF}$) ein anfänglicher Motordrehmomentsollwert ($C_{MI}$) und ein anfänglicher Bremsmomentsollwert ($C_{FI}$) je nach dem Beschleunigungssollwert (A) und der Neigung (P) der Straße berechnet werden, überprüft wird, ob eine Unterbrechung des Parkmanövers vorliegt und ein endgültiger Motordrehmomentsollwert ($C_{MF}$) und ein endgültiger Bremsmomentsollwert ($C_{FF}$) und je nach den anfänglichen Drehmomentsollwerten ($C_{MI}$, $C_{FI}$) und der Detektion der Unterbrechung berechnet werden.

**Claims**

1. Parking assistance system for a motor vehicle allowing the vehicle to be parked from a traffic lane into an available parking space and allowing it to leave said parking space to move onto the traffic lane, said motor vehicle comprising an obstacle detection system, a parking space detection system, steering angle-controllable electric power steering, a torque-controllable engine and braking system, an automatic transmission or what is known as a "shift-by-wire" system, at least one odometric sensor, an accelerometer, and a means for activating an automatic control function, **characterized in that** the parking assistance system comprises a module (12) for determining the acceleration of the vehicle, able to deliver an acceleration setpoint (A) on the basis of the speed (V) of the vehicle and of the distance (D) to an obstacle and a torque control module (14) able to calculate a braking torque setpoint ($C_{FF}$) and an engine torque setpoint ($C_{MF}$) on the basis of the acceleration setpoint (A), of the speed of the vehicle (V) and of the gradient (P) of the road.

2. System according to Claim 1, comprising four operating states, an initial state (E0) corresponding to the phase of searching for a parking space by way of the parking space detection system, a first state (E1) corresponding to a phase of waiting for the start of the maneuver, in which the acceleration determination module (12) calculates a negative acceleration setpoint so as to ensure that the vehicle is kept at a standstill, taking into account the road, a second state (E2) corresponding to an acceleration cancelation phase, in which the acceleration determination module (12) calculates a first acceleration setpoint in accordance with a fast decrease ramp and a second acceleration setpoint in accordance with a slow decrease ramp, a third state (E3) in which the acceleration determination module (12) calculates an acceleration setpoint on the basis of a feedforward filter and of a proportional integral controller, and a fourth state (E4) corresponding to the braking activation phase, in which the acceleration determination module (12) calculates an acceleration setpoint on the basis of a gain of a braking ramp.

3. System according to Claim 2, wherein the torque control module (14) comprises a module (16) for calculating initial torque ($C_{MI}$, $C_{FI}$) on the basis of the acceleration setpoint (A) calculated by the acceleration determination module (12) in each state (E1, E2, E3).

4. System according to Claim 3, wherein the initial torque calculation module (16) comprises a converter (18) for converting the value of the acceleration setpoint (A) into a torque setpoint at the wheel (Cr) on the basis of the speed of the vehicle (V) and of the gradient of the road (P) estimated using the information supplied by the accelerometer of the vehicle.

5. System according to Claim 4, wherein the initial torque calculation module (16) furthermore comprises a saturator (20) delivering, at output, a positive component ($C_{MI}$) corresponding to the initial engine torque setpoint and a subtractor (22) able to subtract the positive component ($C_{MI}$) from the torque setpoint at the wheel (Cr) in order to obtain the initial braking torque setpoint ($C_{FI}$) .

6. System according to any one of Claims 3 to 5, wherein the torque control module (14) comprises a deceleration control module (26) activated only during interruption phases of the parking maneuver, such as the presence of obstacles on the trajectory, the driver canceling the maneuver or the failure of the actuators other than the braking system, said deceleration control module (26) being able to send bypass orders and to calculate a braking torque setpoint ($C_F$) when an interruption is detected.

7. System according to Claim 6, wherein the torque control module (14) comprises a final torque setpoint calculation module (28) capable of arbitrating between the various torque setpoints ($C_{FI}$, $C_{MI}$, $C_F$) that it receives at input so as to deliver a final engine torque setpoint ($C_{MF}$) to the wheel and a final braking torque setpoint ($C_{FF}$) to the wheel.

8. Parking assistance method for a motor vehicle allowing the vehicle to be parked from a traffic lane into an available parking space and allowing it to leave said parking space to move onto the traffic lane, said motor vehicle comprising an obstacle detection system, a parking space detection system, steering angle-controllable electric power steering, a torque-controllable engine and braking system, an automatic transmission or what is known as a "shift-by-wire" system, at least one odometric sensor, an accelerometer, a visual and audio interface and a means for activating an automatic control function, **characterized in that** an acceleration setpoint (A) is calculated on the basis of the speed (V) of the vehicle and of the distance (D) to an obstacle, and a braking torque setpoint ($C_{FF}$) and an engine torque setpoint ($C_{MF}$) are calculated on the basis of the acceleration setpoint (A), of the speed of the vehicle (V) and of the gradient (P) of the road.

9. Method according to Claim 8, wherein, to calculate a braking torque setpoint ($C_{FF}$) and an engine torque setpoint ($C_{MF}$), an initial engine torque setpoint ($C_{MI}$) and an initial braking torque setpoint ($C_{FI}$) are calculated on the basis of the acceleration setpoint (A) and of the gradient (P) of the road, it is checked whether there is an interruption of the parking maneuver, and a final engine torque setpoint ($C_{MF}$) and a final braking torque setpoint ($C_{FF}$) are calculated on the basis of the initial torque setpoints ($C_{MI}$, $C_{FI}$) and of the detection of the interruption.

# FIG.1

# FIG.2

## FIG.3

## FIG.4

**EP 3 592 629 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014136043 A1
- WO 2014167255 A1
- WO 2014191209 A1